# EUROPÄISCHE PATENTSCHRIFT

(11) **EP 0 630 622 B1**
(45) Veröffentlichungstag und Bekanntmachung des Hinweises auf die Patenterteilung: **07.04.1999**
(21) Anmeldenummer: 94810371.8
(22) Anmeldetag: 23.06.1994
(51) Int. Cl.: A61C 13/00, A61K 6/06

(54) **Verfahren zur Herstellung von Dentalprothesen**
Method for manufacturing dental prosthesis
Procédé pour la fabrication de prothèses dentaires

(30) Priorität: 24.06.1993 CH 1894/93
(43) Veröffentlichungstag der Anmeldung: 28.12.1994
(73) Patentinhaber: Hintersehr, Josef, 64347 Griesheim (DE)
(72) Erfinder: Hintersehr, Josef, 64347 Griesheim (DE)
(74) Vertreter: Peege, Klaus

(56) Entgegenhaltungen:
- EP-A- 0 033 492
- EP-A- 0 218 853
- EP-A- 0 375 647

## Beschreibung

Die Erfindung betrifft ein Verfahren zur Herstellung von Dentalprothesen aus keramischen Werkstoffen nach dem Oberbegriff des Patentanspruches 1.

Zur Herstellung von Prothesen (Endoprothesen, Exoprothesen) sind metallische und keramische Werkstoffe bekannt. Bei der Herstellung kompliziert gestalteter Prothesen grosser Präzision überwiegt die Verwendung von Metall, was ganz besonders für die Zahnprothetik Gültigkeit besitzt. In der Zahnprothetik haben sich als Metalle Titanlegierungen (TIAL6N, TIAL6Nb) durchgesetzt, die im Gegensatz zu anderen in der Prothetik bekannten Metallen resistent sind gegen die im Mundbereich herrschenden pH-Wertschwankungen der Mundflüssigkeiten. Titan und seine Legierungen lassen sich mit bekannten Metallbearbeitungsverfahren sehr gut verarbeiten, so dass ausgehend von diesem Metall mit den bekannnten Verarbeitungsverfahren Zahnprothesen - unter Zahnprothesen werden hier Kronen, Brücken, Inlays, Geschiebe und Implantate verstanden - sehr komplizierter Gestaltung mit sehr grosser Präzision herstellbar sind. Der Nachteil von Zahnprothesen aus Titan und Titanlegierungen liegt jedoch darin, dass ihre Festigkeiten nicht in allen Teilen zu befriedigen vermögen. Ein weiterer Nachteil ist, dass eine Metallprothese mit einem Ueberzug oder einer Beschichtung zur Abdeckung der Metallfarbe zu versehen ist, um aus ästhetischen Gründen mit dem Ueberzug der Prothese eine gleiche oder gleichartige Farbe wie die übrigen Gebissteile zu geben.

Keramische Werkstoffe haben bisan nur in vernachlässigbarem Umfang Eingang in die Zahnprothetik gefunden, obwohl keramische Prothesen sich durch hohe Festigkeiten auszeichnen würden. Auch könnte mit diesem Werkstoff die mit Metallprothesen einhergehende Farbanpassung entfallen. Dafür sind zwei wesentliche Gründe und zwar die Dichtsinterung oder Infiltration mit den daraus folgenden Bearbeitungsschwierigkeiten und die Forderung der Biokompatibilität, d.h. Körperverträglichkeit der Keramik verantwortlich. Zahnprothesen sind form- und massgenau zu arbeiten, damit sie ihren bestimmungsgemässen Zweck erfüllen. Eine form- und massgenaue Herstellung wäre bei keramischen Prothesen nur möglich, wenn letztere in porösem Zustand, d.h. in vergleichsweise weichem Zustand bearbeitet wird. In diesem Zustand lassen sich Toleranzen vergleichbar denen der Metallprothesen erreichen. Keramische Zahnprothesen in porösem Zustand sind jedoch nicht einsetzbar. Sie sind auf jeden Fall dichtzusintern oder zu infiltrieren, damit sie die Eigenschaften annehmen, mit denen sie metallischen Zahnprothesen technisch und aestetisch überlegen sind. Dichtsinterung und Infiltration ändern jedoch die in porösem Zustand erreichten Form- und Massgenauigkeiten, so dass eine in einem zweiten Fertigungsschritt dichtgesinterte keramische Zahnprothese nachzuarbeiten wäre. Dichtgesinterte oder infiltrierte keramische Teile nehmen aber solche Härten und Festigkeiten an, dass eine Nacharbeit insbesondere gegenständlich komplex geformter, kleiner und kleinster Teile höchster Präzision wie Zahnprothesen sehr schwierig, wenn nicht ausgeschlossen ist. Zu diesen Einschränkungen der Bearbeitbarkeit treten die an Keramiken als Prothesewerkstoffe zu stellenden Materialanforderungen hinzu. Gefordert wird, dass Prothese-Keramiken bioinert sind, d.h. sie müssen beständig gegen Körperflüssigkeiten sein. Zur Vermeidung der Aufnahme von Körperflüssigkeiten müssen sie ohne bedeutende Schwindung und Verwertung dichtsinterbar oder infiltrierbar sein. Weiter wird Korrosionsbeständigkeit gefordert, damit eine Zahnprothese gegen chemischen Angriff und Abtrag resistent ist. Keramische Werkstoffe für den erfindungsgemässen Zweck haben vorstehende Anforderungen gesamthaft zu erfüllen. Nichterfüllung einer lässt einen keramischen Werkstoff zahnprothetisch ausser Betracht fallen.

Für grössere lasttragende Endo- und Exoprothesen, z.B. Gelenkkugeln, haben sich zwei keramische Werkstoffe qualifiziert, nämlich Aluminiumoxid (AL203) mit einem AL203 Anteil von 99,85%, Rest andere Bestandteile und Zirkonoxid (Zr02) in überwiegend tetragonaler Struktur, stabilisiert durch Magnesiumoxid (Mg02) oder durch ein Oxid der seltenen Erden, vorzugsweise Yttriumoxid (Y203) oder Ceroxid (Ce02). Für kompliziert ausgebildete, kleine oder kleinste Prothesen sehr hoher Mass- und Formgenauigkeit, wie Zahnprothesen sind sie zufolge der Dichtsinterung mit daraus resultierender, einer Nachbearbeitung entgegenstehenden Härten nach Meinung der Fachwelt nicht geeignet.

Aus der EP-A-0 218 853 ist ein Verfahren zur Herstellung von Dental-Prothesen aus Keramik mit 94,8-Gew.% Zr0₂ und 5,2-Gew.% Y₂0₃ bekannt.

Aufgabe der Erfindung ist es, ein Verfahren zur Herstellung keramischer Zahnprothesen zu schaffen, mit dem keramische Prothesen gleicher Form- und Massgenauigkeit wie metallische Prothesen herstellbar sind, dabei ist das Verfahren auf Keramiken auszurichten, die Zahnprothesen eine hohe Festigkeit, chemische Beständigkeit und Biokompatibilität verleihen und Prothesen ein farbliches Erscheinungsbild vermitteln, das ohne oder geringe Nacharbeit dem der übrigen Gebissteile entspricht und diese Aufgabe wird durch die kennzeichnenden Merkmale das Patentanspruches 1 gelöst.

Ueberraschenderweise wurde gefunden, dass es mit den erfindungsgemässen Verfahrens-, d.h. Bearbeitungsparametern möglich wird, dichtgesinterte keramische, d.h. erfindungsgemäss aus einem Zirkonoxid bestehende Zahnprothesen gleicher Form- und Massgenauigkeit wie metallische Zahnprothesen herzustellen. Auf Grund der grossen Härte dichtgesinterten Zirkonoxides stand nicht zu erwarten, dass mit den erfindungsgemässen Verfahrensparametern geforderte Form-und Massgenauigkeiten erreicht würden. Das Zirkonoxid nach der Erfindung ist bioinert, biokompatibel und erfüllt alle weiteren, an keramische Prothesewerkstoffe zu stellenden Anforderungen, so dass mit der Erfindung der Eingang der Keramik in die Klein- und Kleinststeilprothetik, d.h. die Zahnprothetik mit den daraus resultierenden Vorteilen erreicht ist.

Nach der Erfindung besteht für den Prothetiker die Möglichkeit zur Herstellung einer Zahnprothese von einem dichtgesinterten oder infiltrierten Halbzeug, beispielsweise einer Ronde aus Zirkonoxid auszugehen, indem die Prothese aus diesem Halbzeug nach einer Vorlage maschinell herausgearbeitet wird. Auch kann nach der Erfindung zunächst von einem porösen Rohling ausgegangen, dieser unter Dimensionierungszugaben zu einer Prothese umgearbeitet, die poröse Prothese mit Masszugaben als Zwischenprodukt dichtgesintert oder infiltriert und anschliessend vermittels des erfindungemässen Verfahrens auf die Endform und -masse bearbeitet werden.

Im Rahmen der Erfindung liegt auch, mit Hilfe einer Form und Schlickergiessen ein keramisches Zahnprothesen-Rohteil herzustellen, dieses zu trocknen, zu brennen, heissisostatisch nachzuverdichten und anschliessend oxidierend nachzubehandeln, folgend kann der einer Prothese entsprechende figürliche Rohling gemäss der Erfindung fertig bearbeitet werden.

Im folgenden wird die Erfindung an Hand eines Beispieles aus der Zahnprothetik näher erläutert. Das im Zusammenhang mit einer Krone beschriebene Beispiel ist unter Beibehaltung der erfindungsgemässen Werkzeuge und Verfahrensparameter und des keramischen Ausgangsmateriales auch für Brücken, Inlays, Geschiebe und Implantate anwendbar, wobei im Einzelfall die Präparation einer Prothese Aenderungen erfahren kann.

### Beispiel:

Herstellung einer Rondelle (ungefähre Masse angeben) bestehend aus Ytrium stabilisiertem in überwiegend tetragonaler Form vorliegendem Zirkonoxid der Zusammensetzung Zr02 92,1% bis 93,5%, Y203 4,5% bis 5,5%; Hf02 1,8% bis 2,2%, Verunreinigungen höchstens 0,2%, Dichtsinterung der Rondelle, digitale Erfassung und Berechnung eines massstäblichen vom Zahnarzt angefertigten Kronenmodelles mit Innen- und Aussenkontur, Eingabe der Erfassungs- und Berechnungsdaten in eine datenverarbeitende Steuereinrichtung zur Steuerung einer in drei Koordinaten bewegbaren Bearbeitungseinrichtung. Einspannen der Rondelle in eine Halterung, Einstellung der Drehzahl (16.000 u-1) eines metallgebundenen Diamantbohrers als Schleifkörper, des Vorschubes (2mm/s) des Schleifkörpers und dessen Zustellung (0,5 mm/s), Herausarbeiten der Innenkontur der Krone ausgehend von einer ersten Seite der Rondelle, Herausarbeiten der Aussenkontur der Krone ausgehend von der der ersten Seite der Ronde gegenüberliegenden Seite, Ausschneiden der Präparationslinie und Krone aus der Rondelle abtrennen. Anschliessend ist die Krone zu reinigen.

## Patentansprüche

1. Verfahren zur Herstellung keramischer Dentalprothesen, gekennzeichnet durch
(a) Formung eines porösen Rohlings aus in Gewichtsprozent 92,1% bis 93,5% Zirkonoxid (ZR02), Ytriumoxid 4,5% bis 5,5% (Y203) und Hafniumoxid 1,8% bis 2,2% (Hf02), Drittoxide als Rest höchstens 0,2%,
(b) Dichtsinterung oder Infiltration des vorgefertigten Rohlings und
(c) Umarbeitung des Rohlings zu einer Dentalprothese vermittels eines rotierenden Werkzeuges aus metallisch gebundenen Diamantkörnern mit Drehzahlen von 10'000 bis 50'000 Umdrehungen pro Minute, Zustellungen von 0,1 bis 0,5 Millimeter pro Minute, Vorschubgeschwindigkeiten 0,3 bis 3,0 Zentimeter pro Sekunde und Oberflächengeschwindigkeiten für das Werkzeug von 0,5 bis 9,0 m/sec.

2. Verfahren nach Anspruch 1, dadurch gekennzeichnet, dass der Rohling der Dentalprothese entsprechend vorgeformt wird.

3. Verfahren nach Anspruch 1, dadurch gekennzeichnet, dass der Rohling durch Schlickergiessen als Prothese-Rohteil gebildet, anschliessend getrocknet, gebrannt, heissisostatisch nachverdichtet und anschliessend oxidierend nachbehandelt wird.

4. Verfahren nach einem der Ansprüche 1 bis 3, dadurch gekennzeichnet, dass die Umarbeitung vermittels digitaler Erfassung und Berechnung der Maße eines Prothesenmodelles, Eingabe der Erfassungs- und Berechnungsdaten in eine datenverarbeitende Steuereinrichtung und Ausgabe der Daten an eine in drei Koordinaten bewegbare Bearbeitungseinrichtung zur Bewegung des Werkzeuges erfolgt.

## Claims

1. A process for producing ceramic dental prostheses, characterized by
(a) shaping a porous unfinished piece made out of (in percent by weight) 92.1% to 93.5% zirconium oxide (ZrO₂), yttrium oxide 4.5% to 5.5% (Y₂O₃) and hafnium oxide 1.8% to 2.2% (HfO₂), third oxides as rest at most 0.2%, and
(b) dense vertrification or infiltration of the unfinished piece, and
(c) reworking the unfinished piece to a dental prosthesis by means of a rotating tool made of metal-bonded diamond grains with speeds of 10,000 to 50,000 millimeters per minute, infeeds of 0.1 to 0.5 millimeters per minute, advance speeds of 0.3 to 3.0 centimeters per second, and surface speeds for the tool of 0.5 to 9.0 m/sec.

2. A process in accordance with Claim 1, characterized by the fact that the unfinished piece is correspondingly preshaped to the dental prosthesis.

3. A process in accordance with Claim 1, characterized by te fact that the unfinished piece is made as an unfinished prosthesis by slip casting, then dried, baked, redensified heat-isostatically, and then retreated by oxidizing.

4. A process in accordance with one of the Claims 1 to 3, characterized by the fact that the reworking is carried out by means of digital acquisition and calculation of the mass of a prosthesis model, inputting the acquisition and calculation data into a data-processing control unit, and outputting the data to a processing device movable in three dimensions in order to move the workpiece.

## Revendications

1. Procédé pour la fabrication de prothèses dentaires céramiques, caractérisé par
(a) la réalisation d'une galette poreuse comprenant, en pourcentage pondéral, 92,1 % à 93,6 % d'oxyde de zirconium (ZrO₂), 4,5 % à 5,5 % d'yttria (Y₂0₃) et 1,8 % à 2,2 % d'oxyde d'hafnium (Hf0₂), ainsi que 0,2 % au maximum d'oxydes tiers,
(b) la pénétration ou l'infiltration de la galette préparée, et
(c) la transformation de la galette en une prothèse dentaire à l'aide d'un outil rotatif comprenant des grains de diamant métalliquement liés, avec des vitesses de 10'000 à 50'000 rotations par minute, des approches de 0,1 à 0,5 millimètres par minute, des vitesses d'avance de 0,3 à 3,0 centimètres par seconde et des vitesses superficielles pour l'outil de 0,5 à 9,0 m/sec.

2. Procédé selon la revendication 1, caractérisé en ce que la galette est préformée selon la prothèse dentaire.

3. Procédé selon la revendication 1, caractérisé en ce que la galette est formée par coulée en barbotine pour constituer une ébauche de prothèse, puis séchée, cuite, isostatiquement recomprimée à chaud, pour subir ensuite un retraitement oxydant.

4. Procédé selon l'une des revendications 1 à 3, caractérisé en ce que la transformation est réalisée par saisie numérique et calcul des dimensions d'un modèle de prothèse, entrée des données d'acquisition et de calcul dans un dispositif de commande à traitement de données, et sortie des données vers un dispositif d'usinage mobile selon trois coordonnées pour déplacer l'outil.
